# EUROPEAN PATENT APPLICATION

(11) **EP 2 698 753 A1**
(43) Date of publication of application: **19.02.2014**
(21) Application number: 12180729.1
(22) Date of filing: 16.08.2012
(51) Int. Cl.: G06Q 10/10, G06Q 50/18

(54) **Data management system for generating a report document by linking technical data to intellectual property rights data**

(71) Applicant: Corporación Medichem, S.L., 08970 Sant Joan Despí (Barcelona) (ES)
(72) Inventor: Prat, Jordi, 08970 Sant Joan Despi, Barcelona (ES); Castella Martinez, Mercè, 08970 Sant Joan Despi, Barcelona (ES)
(74) Representative: Dilg, Haeusler, Schindelmann Patentanwaltsgesellschaft mbH

(57) **Abstract**

A data management arrangement (150), wherein the data management arrangement (150) comprises a database (152) containing technical product information (154) and intellectual property rights information (156), wherein the technical product information (154) is indicative of technical properties of a technical product, and wherein the intellectual property rights information (156) is indicative of technical features of intellectual property rights, and a report generation entity (170) configured for generating a report data set by linking a part of the technical product information (154) with an assigned part of the intellectual property rights information (156) to thereby generate a report.

## Description

The invention relates to a data management arrangement.

Beyond this, the invention relates to a data management method.

Furthermore, the invention relates to a communication network.

Moreover, the invention relates to a program element.

Furthermore, the invention relates to a computer-readable medium.

A database management system is a software package with computer programs that controls the creation, maintenance, and use of a database. A database is an integrated collection of data records, files, and other objects. A database management system allows different user application programs to concurrently access the same database. Database languages simplify the database organization as well as retrieving and presenting information from it. A database management system provides facilities for controlling data access, enforcing data integrity, managing concurrency control, and recovering the database after failures and restoring it from backup files, as well as maintaining database security.

However, conventional database management system are sometimes inappropriate for managing huge amount of technical data to be shared in a controlled way between many different network elements of a network.

It is an object of the invention to provide a database management system which is appropriate for managing huge amount of technical data to be shared in a controlled way between many different network elements of a network.

In order to achieve the object defined above, a data management arrangement, a data management method, a communication network, a program element, and a computer-readable medium according to the independent claims are provided.

According to an exemplary embodiment of the invention, a data management arrangement is provided, wherein the data management arrangement comprises a database containing technical product information and intellectual property rights information, wherein the technical product information is indicative of technical properties of a technical product, and wherein the intellectual property rights information is indicative of technical features of intellectual property rights, and a report generation entity configured for generating a report data set by linking a part of the technical product information with an assigned part of the intellectual property rights information to thereby generate a report.

According to another exemplary embodiment of the invention, a communication network is provided which comprises a data management arrangement having the above mentioned features, and a plurality of network elements each communicatively coupled to the data management arrangement and being configured for sending (particularly to a controlling network element, for instance operated by an IP department of a company, of the data management arrangement) a report generating request requesting generation of a report data set and for receiving (particularly from the controlling network element of the data management arrangement) a report generating response containing the requested report data set in response to the report generating request.

According to another exemplary embodiment of the invention, a method of managing data is provided, wherein the method comprises storing technical product information and intellectual property rights information in a database, wherein the technical product information is indicative of technical properties of a technical product, and wherein the intellectual property rights information is indicative of technical features of intellectual property rights, and generating a report data set by linking a part of the technical product information with an assigned part of the intellectual property rights information to thereby generate a report.

According to yet another exemplary embodiment of the invention, a computer-readable medium (for instance a CD, a DVD, a USB stick, a floppy disk or a harddisk) is provided, in which a computer program of data management is stored which, when being executed by a processor, is adapted to control or carry out a method having the above mentioned features.

According to still another exemplary embodiment of the invention, a program element (for instance a software routine, in source code or in executable code) of data management is provided, which program element, when being executed by a processor, is adapted to control or carry out a method having the above mentioned features.

Data processing for data management purposes which may be performed according to embodiments of the invention can be realized by a computer program, that is by software, or by using one or more special electronic optimization circuits, that is in hardware, or in hybrid form, that is by means of software components and hardware components.

In the context of this application, the term "database," may particularly denote a set of data elements stored in a storage device such as a harddisk.

In the context of this application, the term "technical product information" may particularly denote properties or features of a technical product such as a commercially sold or to be commercially sold product like a medical device or a pharmaceutical composition. The technical production information may include technical drawings, formula, a quantity of components from which the product is composed, a formulation, a product specification, etc. The technical properties of the technical product may also include physical data of the product such as dimensions, weight, packaging information, etc.

In the context of this application, the term "intellectual property rights information" may particularly denote any kind of data indicative of intellectual property rights such as patents, utility models, design models, etc. The "intellectual property rights information" may at least partially relate to one or more intellectual property rights assigned to another entity (such as a company or a person) than the entity to which the technical product is assigned. The "intellectual property rights information" may however at least partially relate to one or more intellectual property rights assigned to the same entity as the entity to which the technical product is assigned. The term may cover a filing number, a publication number, a filing dates, a publication date, a priority date, identification of applicants, inventors, etc. The intellectual property rights information may include claim features or claims of a corresponding intellectual property right. The intellectual property rights information may also include information regarding a legal status of a patent or utility model such as "published", "granted", "partially revoked" or "fully revoked", "lapsed", etc. The intellectual property rights information furthermore may comprise a technical description and/or technical drawings of the technical invention underlying the intellectual property rights.

The term "report generation entity" may particularly denote a processor or part thereof which is capable of combining or putting together data elements or groups of data elements from the technical product information collection, the intellectual property rights information collection, and optionally further pieces of information from the database and/or from another data source to generate a document, particularly an electronic document (such as a computer file or a set of computer files), which contains selected sub-sets of these data or information pieces to thereby form a single document including all necessary parts of this information in a structured form. For establishing the report, a pre-defined or user-defined report generation algorithm may be executed by the report generation entity which report generation algorithm includes commands as to how to combine the various data elements. For establishing the report, the report generation entity may combine use data (consisting of or comprising technical product information and intellectual property rights information) with format data (indicative of a format of the report assigned to a report requesting entity) and may establish a requested report only in the framework of or in accordance with (for instance limited) access rights to the data in the database assigned to the requesting entity.

The term "report" may denote a computer file (for instance in a format to be directly displayed on a display device such as a monitor or to be directly printable on a printer), a hardcopy or the like including the linked information.

In an embodiment, a system is provided which allows to efficiently use processing capability and storage capabilities in a communication network for report establishing purposes in a flexible and safe way. A centrally accessible database may store different categories of data which, upon a simple request by one of a number of connected computer nodes, puts together correlated pieces of information so as to generate one single report as an output. By taking this measure, it is dispensable to manually prepare such reports by an operator which is both time-consuming and prone to failure. Furthermore, this systems makes its dispensable to store the same data locally on many nodes of the network, since it is possible to remotely and specifically access the data stored only in the central database by each node, and this in a way that the data combined in the generated report is already brought into a format which is specifically adjusted to the needs of the requesting node. Only a small pertinent subset of the data of the database then needs to be transmitted to the requesting node so that not only the data storage requirements but also the data transmission volume is small. Hence, a computer-readable or human-readable report can be generated with selected data stored in one central position to which a number of distributed nodes (such as computers of an intranet or of the public Internet) can get access. Therefore, only one central intelligent network element including the database and a processor is sufficient to serve the entire system with specifically matching reports. It is furthermore possible in a simple way to centrally keep the database updated so that no copies of updates need to be shared among many nodes. Thus, both traffic as well as storage and processing capabilities in the network may be kept small. By centrally managing the database and creating the reports also the security requirements are relaxed, because all access requests are directed to this central entity so that security attacks are much more difficult than in a distributed data sharing system. Furthermore, a report or a document may be created which includes, specifically adapted for a user, all required information to determine in an intuitive way whether a certain technical product falls within the scope of potentially relevant intellectual property rights. Thus, the amount of information a user needs to consider for assessing whether or not a product falls within the scope of patents of a patent landscape can be reduced to the minimum.

For example, the established report may show, for a specific product and in accordance with needs and access rights of a certain node or user, which intellectual property rights might be relevant for the product, in which jurisdiction and for which time interval the they are relevant, what the prior art teaches and renders patent-free, etc.

Next, further exemplary embodiments of the data management arrangement, the communication network, the data management method, the program element and the computer-readable medium will be explained.

In an embodiment, the linking of the data parts may be performed based on linking data provided by a user, such as a user input specifying a number of intellectual property rights of competitors being pertinent to a certain product of a company. Additionally or alternatively, the linking of the data parts may be performed based on linking flags assigned to data pieces or sets of the technical product information and/or of the intellectual property rights information. Such flags may for instance include the information which intellectual property right or rights is or are pertinent to a certain product.

In an embodiment, the report generation entity is configured for generating the report data set in form of an unchangeable (or non-editable) data file. The term "unchangeable" denotes that the generated file cannot be changed or edited by any entity (particularly not by the network elements), since it is stored in an unalterable format or with disabled write rights. This ensures data integrity and prevents that any unauthorized entity changes an IP report. Furthermore, the unchangeable character of the generated reports may ensure that an amended report can only be obtained by centrally updating or amending the database rather than locally modifying a report. This ensures proper maintenance of the database by users, and that it is continuously kept up to date by the users.

In an embodiment, the report generation entity is configured for updating the generated report data set upon determining that at least a part of at least one of the technical product information and the intellectual property rights information (and/or any other piece of information constituting at least partially the previously generated report) has meanwhile changed. For instance, an IP right may lapse in one country due to non-payment of an annuity. Conclusions in the IP report may therefore change. In such an event, the IP report may be changed automatically or upon request of a network element such as a network element operated or controlled by an IP department. In case of such an event, a new IP report may be generated (for instance if the previously established report data set is in form of an unchangeable data file). It is also possible that the already generated IP report may be amended, changed or updated (for instance if the previously established report data set is in form of a changeable or editable data file).

In an embodiment, the arrangement comprises a data folder structure (such as a folder of a tree-like file directory having folders and, optionally, one or more further layers of sub-folders), wherein the data folder structure has a plurality of data folders, wherein each data folder is accessible only by a network element having an access right to access the respective data folder. The data folder structure may form part of the database, or may be provided separately thereof. For each folder, a folder access rights data block (such as a flag) may be provided which indicates which network element(s) is enabled to read or copy the generated report data set stored therein. Therefore, by simply copying the generated IP report into a selected directory, the system may decide about the access rights to the report data set. This is a very simple and error-robust way of administering access rights.

Thus, in an embodiment, the limitation of access of the different users may be organized at another level than the level of the database or the generation of the reports but only later, i.e. once the reports are generated. It may be simply organized in terms of who has access on Windows level to the files where the reports are saved, for instance in .pdf format (this can be done over Lightweight Directory Access Protocol, LDAP).

In an embodiment, the report generation entity is configured for storing the generated report data set in a selected one of the plurality of data folders. The selection may be done by the report generation unit, by a control unit, by a network element operated by a responsible or competent entity such as the IP department. One or more criteria for the selection can be taken from an access rights database assigning a certain destination data folder to report generation requests originating from or being assigned to a certain network element or user.

In an alternative embodiment, the method may comprise storing the generated report data set in a selected one of the plurality of data folders, for instance manually by a user. Hence, the arrangement only generates the report data set, and a human operator administering the system decides into which data folder the generated IP report is to be copied. Hence, a user may consider each particularity for distributing the generated IP reports to data folders with limited and well-defined accessibility.

In an embodiment, only a defined control node (such as a network element operated by the IP department of a company) may be allowed to initiate or request generation of an IP report. This may allow to centrally control the report generation task.

In an embodiment, the selection is made, particularly by the report generation entity, based on the identity of a requesting one of the plurality of network elements and based on the access rights assigned to the requesting one of the plurality of network elements. For instance, together with the report generation request, this control node may send the report generation unit an identifier identifying the actually requesting network element or user on behalf of which the report generation request is sent. This may provide the report generation unit with the required information to store the generated report in the correct directory or data folder.

The linking of the individual data items may be performed by applying one or more filters defining selection and/or combination of the data items. Such filters may be criteria involving access rights of certain users, information requirements of certain users, format requirements of certain users, etc.

In an embodiment, it is possible that the report generation entity does not store the generated report data set in the database, but exports the generated report data set into another database, for instance a local database operated autonomously by one of the network elements. Hence, data import to and/or data export from the central database is possible. If the generated report shall be sent to another database, this may be indicated by report transmission data included in a report generation request.

In an embodiment, the database further contains access right information indicative of access rights (data read rights and/or data write rights) for a part of or for each of a plurality of network elements (such as computer nodes assigned to different users or user groups) to be communicatively coupled to the data management arrangement. Different network elements or nodes may have different access rights to the individual pieces of information stored in the database. For instance, a CEO of a company may have access rights to everything in the database. Also an IP department of a company may have access to each and every piece of information for establishing IP reports. On the other hand, an R&D department, a marketing department or product managers may get access only to a certain part of the data (such as limited to technical data, commercial data, legal data, etc.). Hence, different levels or degrees of access rights may be assigned to individual network elements. Thus, data integrity and data security may be ensured by assigning different access rights to different network elements.

In an embodiment, the data management arrangement is configured for enabling generation of the report data set upon request of one of the network elements only if this network element has access rights to data included in the requested report data set. Therefore, already prior to the generation of the report, the decision is taken whether a certain network element is allowed to get access to corresponding data or not. Thus, a resource-efficient data management is made possible, since a report is only generated after previous successful authorization. Unnecessary processing of data can therefore be omitted so that processing capability of the system may be used efficiently.

In an embodiment, the access right information includes a network element profile for a part of or for each of a plurality of network elements, wherein the network element profile is indicative of a part of data contained in the database for which the respective network element has an access right and of another part of data contained in the database for which the respective network element has no access right. Such a network element profile assigns data to each network element (and therefore to an operator thereof) with regard to read access and/or write access. For instance, network elements operated by technical staff can only be allowed to access technical information, i.e. write technical information into the database and/or read technical information from the database. It is also possible that reads access rights and write access rights are different, depending on the degree of reliability needed for a certain data transmission procedure.

In an embodiment, the database further contains report profile information indicative of a plurality of report profiles, each of which defining a format according to which a report is established upon request by or on behalf of (for instance, generation of a report to be established for a first network element is triggered by another, second network element) one of a plurality of network elements to be communicatively coupled to the data management arrangement. By taking this measure, a data set defining content and/or structure and/or appearance of a certain report in accordance with preferences of a particular network element may be defined in the respective report profile. For instance, it is possible for a user to make a selection among a number of different report profiles depending on for which entity the report is to be generated or depending on which kind of report a requesting network element is interested in. Thus, it is possible to adapt a generated report to the user requirements with a very small amount of extra data volume. By centrally storing the report profiles in a database it is possible to make a simple selection (for instance by clicking on a certain button or icon of a graphical user interface) to define the format of the report to be established. The system may also offer the opportunity for a user to define a report profile in accordance with the needs of this user.

In an embodiment, the data management arrangement is configured for generating the report data set upon request of one of the network elements based on access rights assigned to the requesting network element and based on a report profile assigned to the requesting network element. Therefore, if a user simply sends a report establishing request, a data set can be unambiguously assigned to this user with regard to granted access rights and with regard to an assigned report profile. Therefore, the generated report may be brought in accordance specifically with the requirement of a user without high data processing requirements.

In an embodiment, the database further contains a report archive including previously generated report data sets or reports. If a report has been generated (for instance in the form of a computer file), it is possible to store it in a report archive so that it can be accessed later by the same or another user again. This supports a paperless office effort, since no printout is necessary and also no decentralized storage of reports is necessary. Access to the report archive to read a previously prepared report can be made dependent on access rights assigned to the different users. Hence, if a certain network element requests to download a report from the report archive it is checked before transmission of the requested report whether the requesting network element has the required access rights for accessing this specific report. This further increases data integrity.

In an embodiment, the report generation entity is configured for querying the report archive prior to generating a requested report data set to thereby retrieve the report data set from the report archive in case the requested report data set has already been generated previously. By taking this measure, it is possible with a minimum additional requirement of resources of a processor to verify whether it is really necessary to generate a new report or whether this report is already available in the report archive. Hence, processor resources and storage resources may be kept small by ensuring that a requested report is only generated if it is not yet available in the report archive.

In an embodiment, the database further contains intellectual property analysis results information being indicative of results from an intellectual property analysis and being input to the database via a user interface. For instance, an IP department of a company may prepare a freedom to operate analysis for a certain product indicating which intellectual property rights is relevant for this product. Corresponding information may then be input manually into the system to be integratable in the report generation.

In an embodiment, the arrangement comprises a (for instance graphical) user interface configured for inputting data into the database and for receiving data from the database. The arrangement may comprise a communication interface to be communicatively coupled to each of a plurality of network elements to be communicatively coupled to the data management arrangement so as to enable a part of or each of a plurality of network elements to access the database, particularly for writing data into the database and/or for reading data from the database, wherein the access to the database may particularly be limited in accordance with an access right profile of the respective network element. Thus, the system may also be permanently updated by information which can be introduced into the database by the individual network elements. Therefore, the mentioned data can be updated or added to the database. It is also possible that an automatic update is performed for instance with regard to newly published patent documents accessible via remote databases (such as online databases provided by a patent office). Such a database may be queried regularly so as to monitor for instance intellectual property rights of certain competitors or the like.

It is also possible, via the graphical user interface, that the network elements access data which is stored therein. Therefore, the database can additionally also be used as a shared database apart from the report generation performance.

Such a user interface may be a Windows-based system via which a user can communicate bidirectionally with the system. Such a graphical user interface may include input elements such as a computer mouse, buttons, a keypad, etc. allowing a user to control the graphical user interface. The graphical user interface may further include a display device or the like which can display text, buttons, icons, windows or the like as well as input fields allowing a user to fill in the required information for report generation.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a communication network according to an exemplary embodiment of the invention.
Fig. 2 illustrates a communication network according to another exemplary embodiment of the invention.
Fig. 3 illustrates a flow chart showing a procedure in accordance with a method of managing data according to an exemplary embodiment of the invention.
Fig. 4 illustrates a communication network according to still another exemplary embodiment of the invention.

### DESCRIPTION OF EMBODIMENTS

The illustration in the drawing is schematically.

Before describing exemplary embodiments in further detail, some considerations of the present inventors will be summarized based on which exemplary embodiments of the invention have been developed.

In an embodiment, a database for, inter alia, a patent department is provided. For instance information on competitor's patents may be introduced or downloaded from an official database such as Espacenet, for example patent/application/publication numbers, filing/priority/publication dates, applicants, inventors, titles, abstract, claims, country equivalents within a patent family. Further, there may be various fields for introducing comments and results of analysis of the patents/applications, like a comment to the whole patent family, a comprehensive short title or "related to", comments regarding relevance and validity of specific claims or claim groups, disclosures in the description, with the possibility to copy and paste parts of the documents into input fields, including drawings. In addition, business and technical information regarding the medical product as such can be introduced, for example the date of the marketing authorization, exclusivity dates, patent extensions, information on the originator's product, etc.

Additionally, such a database for a patent department may allow introduction of data and transfer of this data to tables or databases of other departments of a company.

An embodiment of the invention also includes a provision enabling the analyses of these competitor's patents. In addition to the possibility of introducing comments and to print out reports, a comprehensive and complex analysis work product may be generated in form of an IP report. In addition, comprehensive market information on the product as such may be included.

In an embodiment, a database is provided which can not only link data regarding patents to other databases and tables for quick data transfer but also provides the possibility to generate any kind of patent report visualizing the analysis of all patents. Patent reports which can be generated can be most complete with 50 or more pages, including all information on the product, like market and technical information as well as listing and commenting all patents relating to that product, organised and prioritised according to the subject matter of the patent, its relevance and the country. Other patent reports which can be generated are for example tables listing the most relevant patents, which can be prioritised/ordered according to any parameter, for example country, filing date (and expiry date), applicant, type of claims, relevance, etc.

An advantage of such an embodiment is that one single database is provided which is sufficient for all necessities of the patent department. There is no need any more for additional word documents comprising analysis, beside the database. Quick data transfer to all databases of departments interested in patent information is possible as well. It is sufficient to only update the central database, and all departments of the company have immediate and up to date information, according to their needs. Information can be introduced and controlled in only one place with limited access to the information

(who can introduce information, who can read the information and who receives selected data) in order to limit liability and in order to ensure data integrity. Further, with only a few clicks (by selecting filters) any kind of report, complex or simple, can be generated immediately according to the needs (which meeting, which department, etc.). It is not necessary to write various reports for these different needs, each report of course needing later updating and being of course open to errors. In addition to information transfer from the patent department to other departments, there is also a data flow from other departments to the patent department, for example technical data from R&D or business information (clients) from the commercial department.

In an embodiment, once a patent landscape is analysed, information is introduced in only one database and can from there be generated in any kind of way. This results in less errors, is less time consuming, allows always updating in only one place instead of various reports and tables, and all departments interested having the latest updates automatically.

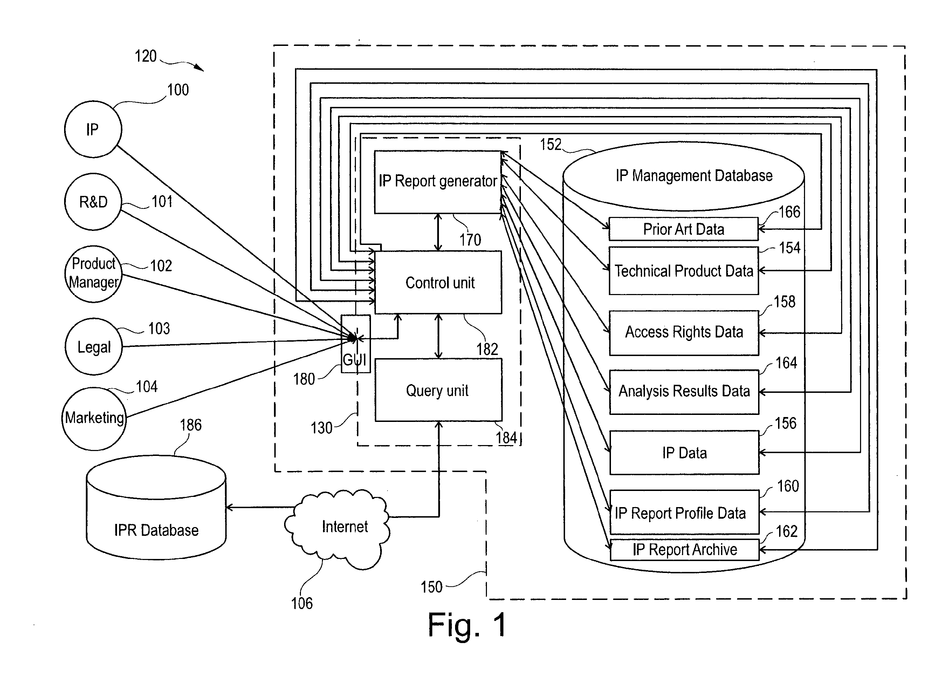

**Fig. 1** illustrates a communication network 120 according to an exemplary embodiment of the invention. The communication network 120 comprises a data management system 150, which may be a server computer, on the one hand and a plurality of network elements 100 to 104, which may be client computers, each communicatively coupled with the data management system 150.

Network element 100 is a computer of an intellectual property or patent department of a company. Network element 101 is a computer of a research and development department of the company. Network node 102 is the computer of a product manager of a company. Network element 103 is a computer of a legal department of company, and network element 104 is a computer of a marketing department of the company. Of course, there may be more or less or other network elements. The individual network elements 100 to 104 can be communicatively coupled to one another, within an intranet, and/or together within the public Internet 106.

Any of the network elements 100 to 104 may have the need to get access to a patent report which includes data with regard to a certain technical product (such as a pharmaceutical composition), one or more pertinent intellectual property rights such as competitor's patents and/or own patents. The patent report may contain further information such as the result of a freedom to operate analysis of a patent department.

In order to trigger machine-controlled generation of such a report, each of the network elements 100 to 104 may send a report generating request to the data management system 150. Within the data management system 150, the access rights of the respective requesting network element 100 to 104 is checked and a report data set including all data of the report in a structured way can be established. The generated report may then be sent back from the data management system 150 to the requesting one of the network elements 100 to 104 as a computer file (for instance a Word file or a pdf file).

More specifically, the data management system 150 comprises a database 152 which can include a set of electronic data stored on a storage device such as a harddisk. Particularly, the database 152 contains technical production information 154 indicative of technical properties of a technical product being subject of the report to be established. For the present example of a product in form of a pharmaceutical composition, this can include a chemical formula or chemical structure of an active compound, etc. Furthermore, the database 152 comprises intellectual property rights information 156 including a list of patents which have been considered as possibly or particularly pertinent, for instance they have been identified individually or they have been determined from a database such as Espacenet by a search for third party rights assigned to one or more certain applicants or the like. Moreover, the database 152 contains access right information 158 being indicative of access right for each of the network elements 100 to 104 being communicatively coupled to the data management system 150. These access rights may define to which part of the data the various network elements 100 to 104 are allowed to obtain access. For instance, the IP department operating the network element 100 may get access to each and every data item stored in the database 152. The research and development department having access to network element 101 can, for instance, obtain access rights which are limited to the technical product data 154. A product manager and a legal department as well as the marketing department operating network elements 102 to 104 can get other access rights. Even for one and the same one of the network elements 102 to 104, read access rights and write access rights may be stored separately as part of the access right information 158 and may be different. In accordance with the access rights assigned to the individual network elements 100 to 104, it can be determined which data items may be used for being combined to form a technical report for this specific network element.

Moreover, the access right information 158 may include a network element profile for each individual network element 100 to 104. This network element profile may be indicative of a part of data contained in the database 152 for which the respective network element 100 to 104 has an access right and of another part of data contained in the database 152 for which a respective network element 100 to 104 has no access right. Therefore, access to the data may be defined and administered centrally.

The database 152 may further contain a report profile information 160 including a plurality of report profiles each corresponding to an assigned template or structure of report data. It may define as to how a report requested to be established in the respective report profile is structured. Based on the selection of a specific template or structure of a report profile and based on content data 154, 156, it is possible to establish a report with a certain format and with a certain information in it. Therefore, it is possible to a user to simply select a certain report profile and a certain product, and the report will be established correspondingly.

A report archive 162 includes previously generated report data sets, for instance in the form of electronic files. It is possible for the network elements 100 to 104, provided that they have the corresponding access rights, that they later access a report which has been generated previously and which is stored in the report archive 162. Thus, time consuming and resource intense anew generation of an already existing report can be omitted when checking, prior to the execution of a report generation request, whether the report is already available in the report archive 162.

Intellectual property analysis results information 164 is stored in the database 152 as well. This information is indicative of results from an intellectual property analysis and can be input to the database 152 via a user interface 180. If for instance an IP department operating network element 100 has prepared an intellectual property analysis such as a freedom to operate analysis, the corresponding data may be transmitted via the graphical user interface 180 into the analysis results database 164.

Prior art data such as patent publications or non-patent literature may be stored as prior art data information 166 as part of database 152. The prior art data information 166 may be the publication itself, or may be information describing the content thereof.

Apart from the opportunity to automatically establish an IP report, the graphical user interface 180 also forms a communication interface via which the various network elements 100 to 104 can input data into the database 152. For instance, a research and development staff operating network element 101 may input technical product data 154. An IP department operating network element 100 may input, via the graphical user interface 180, data into the analysis results data 164, etc.

Apart from the database 152, another component of the data management system 150 is a processor 130 which controls the communication network 120. The processor 130 has a control unit 182 which communicatively couples to the various data sections 154, 156, 158, 160, 162, 164, 166 of the database 152. If one of the network elements 100 to 104 desires read and/or write access to any of these data sections 154, 156, 158, 160, 162, 164, 166 in the database 152, this can be input via the graphical user interface 180 so that the control unit 182 can determine whether the corresponding network element 100 to 104 obtains a corresponding read or write access right.

A query unit 184 is optionally provided and can query an IPR database 186 which includes publicly available patent literature (for instance Espacenet) so as to download newly published patent documents. A corresponding communication connection may be done via the Internet 106.

Furthermore, the processor 130 has an IP report generator unit 170. The report generation entity 170 is configured for generating a report data set by linking a part of the technical product information 154 with an assigned part of the intellectual property rights information 156, with an assigned part of the prior art data 166, with an assigned part of the analysis results data 164 and/or with IP data 156. The IP report generator unit 170 may take an IP report profile from the IP report profile data 160 and may correspondingly link the data from the parts 166, 154, 164, 156 of the database 152. On this basis, the IP report generator 170 may define and put together a data report set and may hence establish a corresponding data file which can then be transmitted to the requesting network element 100 to 104.

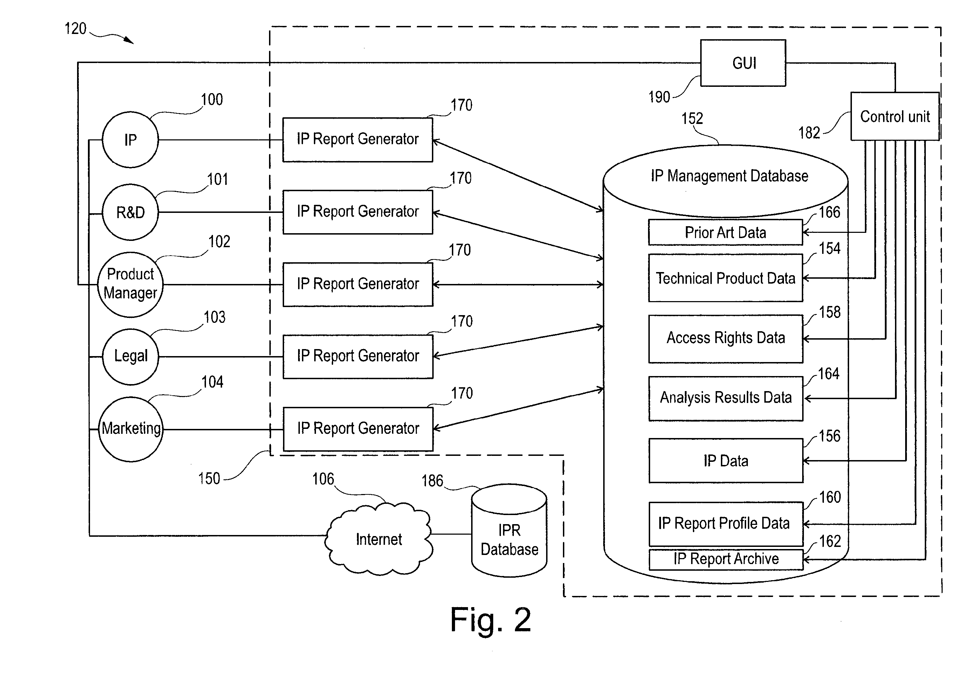

**Fig. 2** shows a data management system 150 of a communication system 120 according to another embodiment of the invention.

According to Fig. 2, each of the network elements 100 to 104 has an assigned (local) IP report generator unit 170, for instance forming part of the respective processor. For getting a report established, the corresponding network element 100 to 104 addresses the corresponding request to its assigned IP report generator 170 which then directly communicates with the database 152 for preparing the patent report.

Furthermore, each of the network elements 100 to 104 is, in the embodiment of Fig. 2, communicatively coupled via a graphical user interface 190 and a control unit 182 (such as a processor) to the various sections of the IP management database 152 to obtain a read or write access there.

Furthermore, no automatic queries are made to the IPR database 186 according to Fig. 2. In contrast to this, the network elements 100 to 104 communicate via the public Internet 106 with the IPR database 186 and can download IP information from there. This information can then, by the respective network element 100 to 104, be sent to the IP management database 152 for storage.

Hence, in Fig. 1, a central processor 130 controls the entire process of report generation upon receipt of a report generation request and also manages centrally read and write access to the database 152. In Fig. 2, local processors 170 control the process of report generation.

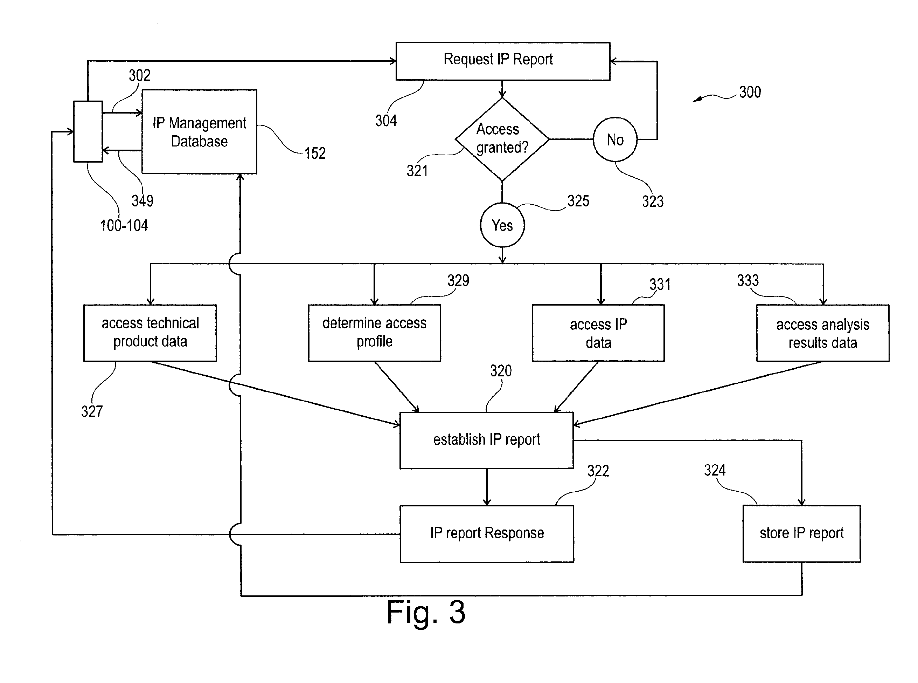

**Fig. 3** illustrates a block diagram 300 of a method of establishing an IP report according to an exemplary embodiment of the invention.

Any of the nodes 100 to 104 can send an IP report generation request to the IP report generator 170, see block 304. When a network element 100 has sent a request for establishing an IP report, it is checked in a block 321 whether the access can be granted. For the purpose of this check, the access rights data 158 in the IP management database 152 is accessed. If not, see reference numeral 323, the access is denied and the requesting one of the nodes 100 to 104 can be informed correspondingly. If yes, see reference numeral 325, the IP report generator 170 accesses the technical product data 154 in the IP management database 152, see block 327. Furthermore, the IP report generator 170 accesses the access rights data 158, see block 329, the IP data 156, see block 331, and the analysis results data 164, see reference numeral 333. Based on these items of information, the IP report is then established, see block 320. Consequently, an IP report response 322 is sent back to the requesting one of the network elements 100 to 104. The generated IP report can be further stored, see block 324, in IP report archive 162.

Furthermore, the network elements 100 to 104 may bidirectionally communicate with the IP management database 152 by corresponding read or write requests 302. Upon sending a read request, a response 349 including the requested data is sent back.

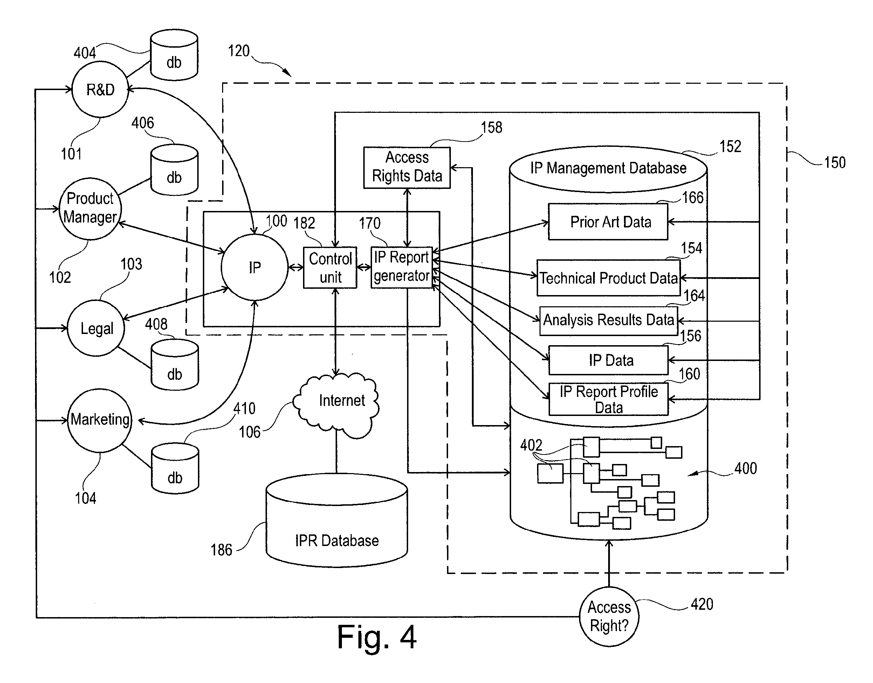

**Fig. 4** shows a data management system 150 of a communication system 120 according to another embodiment of the invention.

In the following, only the differences between the Fig. 4 embodiment and the embodiments of Fig. 1 and Fig. 2 are explained. Apart from this, explicit reference is made to the disclosure regarding the embodiments of Fig. 1 and Fig. 2.

In Fig. 4, the report generation unit 170 forms part of or is integrally formed with the IP network element 100 and is configured for generating the report data set in form of .pdf document, i.e. as anoneditable data file. The arrangement 120 furthermore comprises a data folder structure 400, i.e. a tree-like file directory having folders 402. Each data folder 402 is accessible only by a network element 101 to 104 having an access right to access the respective data folder 402. In the shown embodiment, the data folder structure 400 forms part of the database 152 (it may alternatively be arranged physically and/or logically apart from the database 152). For each folder 402, a folder access rights data block is stored in an access rights data unit 158 which indicates which of the network element(s) 101 to 104 is or are enabled to read or copy the generated report data set to be stored in each respective folder 402. The report generation unit 170 is configured for storing the generated report data set in a selected one of the plurality of data folders 402. The selection is performed based on data stored in the access rights data unit 158 (which is here located outside of the database 152, but may alternatively form part thereof) assigning a certain destination data folder 402 to report generation requests being assigned to a certain network element 101 to 104. Alternatively, the assignment of a certain destination data folder 402 may be made manually by an operator of the IP network element 100.

When the report has been generated, it is stored in a selected data folder 402, wherein the selection is made as described above. For accessing the report, a corresponding (read) request is sent from one of the network elements 101 to 104 to the data folder structure 400. An access rights verification unit 420 grants a requesting one of the network elements 101 to 104 access to a certain data folder 402 and therefore to the desired report only if this network element 101 to 104 has the required access right.

Exclusively the IP network element 100 is able to trigger generation of an IP report. The above-mentioned selection is made by the report generation unit 170 based on the identity of a requesting one of the plurality of network elements 101 to 104 and based on the access rights assigned to the requesting one of the plurality of network elements 101 to 104.

In the shown embodiment, the generated reports are not only stored in the database 152. Additionally, corresponding reports are stored in local databases 404, 406, 408, 410 assigned and operated by the individual network elements 101 to 104.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A data management arrangement (150), wherein the data management arrangement (150) comprises
a database (152) containing technical product information (154) and intellectual property rights information (156), wherein the technical product information (154) is indicative of technical properties of a technical product, and wherein the intellectual property rights information (156) is indicative of technical features of intellectual property rights;
a report generation entity (170) configured for generating a report data set by linking a part of the technical product information (154) with an assigned part of the intellectual property rights information (156) to thereby generate a report.

2. The arrangement (150) according to claim 1,
comprising a data folder structure (400), particularly a data folder structure (400) forming part of the database (152), wherein the data folder structure (400) has a plurality of data folders (402), wherein each data folder (402) is accessible only by a network element (100 to 104) having a folder access right to access the respective data folder (402);
wherein the report generation entity (170) is configured for storing the generated report data set in a selected one of the plurality of data folders (402).

3. The arrangement (150) according to claim 2,
wherein the selection is made, particularly by the report generation entity (170), based on the identity of a requesting one of the plurality of network elements (100 to 104) and based on the folder access rights assigned to the requesting one of the plurality of network elements (100 to 104).

4. The arrangement (150) according to any of claims 1 to 3,
wherein the database (152) further contains access right information (158) indicative of access rights for at least a part of a plurality of network elements (100 to 104) to be communicatively coupled to the data management arrangement (150).

5. The arrangement (150) according to claim 4, comprising at least one of the following features:
the data management arrangement (150) is configured for enabling generation of the report data set upon request (304) of one of the network elements (100 to 104) only if this network element (100 to 104) has access rights to all data included in the requested report data set;
the access right information (158) includes a network element profile for at least a part of the plurality of network elements (100 to 104), wherein the network element profile is indicative of a part of data contained in the database (152) for which the respective network element (100 to 104) has an access right and/or of another part of data contained in the database (152) for which the respective network element (100 to 104) has no access right.

6. The arrangement (150) according to any one of claims 1 to 5, wherein the database (152) further contains report profile information (160) indicative of a plurality of report profiles, each of which defining a format according to which a report is established upon request (304) by or on behalf of an assigned one of a plurality of network elements (100 to 104) to be communicatively coupled to the data management arrangement (150).

7. The arrangement (150) according to any one of claims 1 to 6,
wherein the database (152) further contains a report archive (162) including previously generated report data sets.

8. The arrangement (150) according to any one of claims 1 to 7, comprising one of the following features:
the report generation entity (170) is configured for generating the report data set in form of an unchangeable data file;
the report generation entity (170) is configured for updating the generated report data set upon determining that at least a part of at least one of the technical product information (154) and the intellectual property rights information (156) has meanwhile changed.

9. The arrangement (150) according to any one of claims 1 to 8, wherein the database (152) further contains intellectual property analysis results information (164) being indicative of results from an intellectual property analysis and being input to the database (152) via a user interface (180, 190).

10. The arrangement (150) according to any one of claims 1 to 9, comprising a graphical user interface (180, 190) configured for inputting data into the database (152) and for receiving data from the database (152).

11. The arrangement (150) according to any one of claims 1 to 10, comprising a communication interface (180, 190) to be communicatively coupled to at least a part of a plurality of network elements (100 to 104) to be communicatively coupled to the data management arrangement (150) so as to enable at least a part of a plurality of network elements (100 to 104) to access the database (152), particularly for writing data into the database (152) and/or for reading data from the database (152), wherein the access to the database (152) is particularly limited in accordance with an access right profile of the respective network element (100 to 104).

12. A communication network (120), comprising:
a data management arrangement (150) according to any one of claims 1 to 11;
a plurality of network elements (100 to 104) each communicatively coupled to the data management arrangement (150) and being configured for sending, particularly to the data management arrangement (150), more particularly to a controlling network element (100) of the data management arrangement (150), a report generating request (304) requesting generation of a report data set and for receiving, particularly from the data management arrangement (150), more particularly from the controlling network element (100) of the data management arrangement (150), a report generating response (322) containing the requested report data set in response to the report generating request.

13. A data management method (300), wherein the method (300) comprises
storing (302) technical product information (154) and intellectual property rights information (156) in a database (152), wherein the technical product information (154) is indicative of technical properties of a technical product, and wherein the intellectual property rights information (156) is indicative of technical features of intellectual property rights;
generating (320) a report data set by linking a part of the technical product information (154) with an assigned part of the intellectual property rights information (156) to thereby generate a report.

14. A computer-readable medium, in which a computer program of managing data is stored, which computer program, when being executed by a processor (130), is adapted to carry out or control a method (300) according to claim 13.

15. A program element of managing data, which program element, when being executed by a processor (130), is adapted to carry out or control a method (300) according to claim 13.
